# EUROPEAN PATENT SPECIFICATION

(11) **EP 2 520 607 B1**
(45) Date of publication and mention of the grant of the patent: **23.08.2017**
(21) Application number: 10841146.3
(22) Date of filing: 08.12.2010
(51) Int. Cl.: C08G 73/10, C08K 3/04, C08L 79/08, C08J 5/00, C08K 7/24

(54) **METHOD FOR MANUFACTURING A WHOLLY AROMATIC POLYIMIDE POWDER HAVING AN ANTISTATIC OR CONDUCTIVE PROPERTY**
VERFAHREN ZUR HERSTELLUNG EINES VOLLAROMATISCHEN POLYIMIDPULVERS MIT EINER ANTISTATIK- ODER LEITUNGSEIGENSCHAFT
PROCÉDÉ DE FABRICATION DE POUDRE DE POLYIMIDE ENTIÈREMENT AROMATIQUE À PROPRIÉTÉS ANTISTATIQUES OU CONDUCTRICES

(30) Priority: 30.12.2009 KR 20090134769
(43) Date of publication of application: 07.11.2012
(73) Proprietor: Daelim Corporation, Seoul 100-743 (KR)
(72) Inventor: KANG, Jin Soo, Daejeon 305-720 (KR); HWANG, Yong Jae, Bucheon-si Gyeonggi-do 422-715 (KR)
(74) Representative: Charrier Rapp & Liebau
(86) International application number: PCT/KR2010/008743
(87) International publication number: WO 2011/081314

(56) References cited:
- WO-A1-2005/034144
- WO-A2-03/040026
- JP-A- 2004 083 896
- JP-A- 2004 115 787
- JP-A- 2004 115 787
- JP-A- 2005 206 616
- JP-A- 2008 111 094
- KR-B1- 100 691 837
- JIANG X ET AL: "Electrical and mechanical properties of polyimide-carbon nanotubes composites fabricated by in situ polymerization", POLYMER, ELSEVIER SCIENCE PUBLISHERS B.V, GB, vol. 46, no. 18, 23 August 2005 (2005-08-23), pages 7418-7424, XP027727199, ISSN: 0032-3861 [retrieved on 2005-08-23]

## Description

### [FIELD OF THE INVENTION]

The present invention relates to a method for preparing wholly aromatic polyimide powder having antistatic properties or electric conductivity.

### [BACKGROUND]

Generally, the term polyimide (hereinafter, referred to as "PI") resin refers to high heat-resistant resin which is prepared by reacting aromatic tetracarboxylic acid or a derivative thereof with aromatic diamine or aromatic diisocyanate, followed by imidization. The PI resin can have various types of a molecular structure depending on the kind of a monomer used. Representative aromatic tetracarboxylic acid derivatives may include pyromelitic dianhydride (PMDA) and 3,3',4,4'-biphenyltetracarboxylic dianhydride (BPDA), and representative aromatic diamines may include oxydianiline (ODA) and para-phenylenediamine (*p*-PDA). The most representative polyimide resin has a structure represented by Formula 1 as a repeating unit.

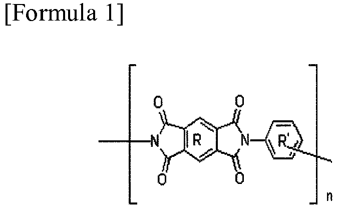

The polyimide resin including the repeating unit of Formula 1 is ultra-high heat-resistant resin which is non-soluble/non-melting, has excellent heat resistance such as good thermo-oxidative stability, 280 °C of operating temperature for long term and 480°C of operating temperature for short term, and shows high electrical insulating and mechanical properties, radiation resistance and low temperature properties, and chemical resistance. Therefore, the polyimide resin has been widely used as a core material in the various high-tech industries including electrics/electronics, automotives, semiconductor and aerospace industries.

However, in the field of semiconductor or flat panel display, the problem of static electricity has been raised due to the enlargement of a wafer and a glass substrate, and thus there have been several attempts to confer electrical conductivity to a polyimide molded article having insulating properties.

As a representative method for conferring electrical conductivity to non-soluble/non-melting wholly aromatic polyimide, Canadian Patent No. 708,869, U.S. Patent No. 4,568,412, U.S. Patent No. 5,075,036 and U.S. Patent No. 5,078,936 disclose a method of using electrically conductive carbon black or a combination of electrically conductive carbon black with graphite powder. However, this method is restricted to the preparation of a polyimide film by dispersing the mixture in polyamic acid as a precursor, and there is no example of applying it to the preparation of polyimide powder for manufacturing a material for processing by compression molding of the polyimide. U.S. Patent Publication No. 2007/0152195 A1 discloses a method for conferring electrical conductivity using various types of metal oxides. In some commercialized products, graphite and carbon fiber have been used, but they suffer from the problems in that electrical properties are locally different due to the orientation of carbon fiber, and the carbon fiber being exposed to the surface causes the formation of fine scratches on the surface of a semiconductor and a glass substrate during the manufacturing process of a semiconductor or a flat panel display. Further, it is difficult for these methods to reproducibly show an anti-static area of 10⁶-10⁹ Ω/□ through the regulation of fillers. In order to show 10⁵ Ω/□ or lower of surface resistance, these methods require using an excessive amount of electrically conductive fillers. During powder polymerization, the thus added fillers absorb a solvent and are swollen, which makes it difficult to form a uniform slurry mixture. Therefore, it is not easy to carry out post-treatment steps including filtration, washing and drying, and thereby, there are several problems of lowering in mechanical properties, generation of an excessive amount of particles caused by abrasion, release or out-gassing under high temperature and high vacuum during the manufacture of a molded article.

WO 03/040026 A2 decribes a method for dispersing carbon nanotubes in a polymer matrix to prepare a polymer/carbon nanotube nanocomposite, comprising: (a) dispersing carbon nanotubes in an organic solvent; (b) adding one or more monomers of the polymer of interest to the dispersed nanotubes; and (c) polymerizing the monomers in the presence of the dispersed nanotubes under mechanical stirring.

Jiang et al describe electrical and mechanical properties of polyimide-carbon nanotube composites fabricated by in situ polymerization.

JP 2004 115787 A describes a method for producing a polyimide film, which comprises dispersing a powder having an electrical resistivity in the powder state of 0.1 to 10⁵ Ωcm in a solution of polyamic acid, then forming the polyamic acid solution into a film, and further subjecting the film to an imidizing cyclization treatment.

WO 2005 034144 A1 discloses thermoplasic polyimide compositions comprising carbon black and cabon nanotubes.

### [SUMMARY OF THE INVENTION]

It is an object of the present invention to provide a method for preparing wholly aromatic polyimide powder having excellent electrical properties with maintaining good heat-resistance and mechanical properties, which is characterized by preparing non-soluble, non-melting polyimide resin powder having excellent antistatic properties whose surface resistance is in the area of 10⁶∼10⁹ Ω/□.

It is another object of the present invention to provide a method for preparing non-soluble, non-melting polyimide resin powder having excellent electrical conductivity whose surface resistance is 10⁵Ω/□ or lower.

It is another object of the present invention to provide a molded article prepared using the polyimide resin powder according to the method of the present invention.

The present invention provides a method for preparing polyimide resin powder, as defined in Claim 1.

Further, the present invention provides a polyimide molded article which is prepared using the polyimide composite powder prepared according to the method of the present invention.

### [EFFECT OF THE INVENTION]

According to the method of the present invention, the mixture of aromatic diamine monomer and aromatic tetracarboxylic dianhydride monomer is dissolved in a phenolic polar organic solvent in which two kinds of conductive inorganic particle powders composed of conductive carbon black and multi-wall carbon nano-tube are dispersed, and then, the resulting mixture is gradually heated so as to simultaneously perform imidization and composition reactions. As a result, the present invention provides polyimide resin powder which maintains intrinsic heat-resistance and mechanical properties of conventional polyimide and has antistatic properties whose surface resistance is in the area of 10⁶∼10⁹ Ω/□ due to the uniform dispersion of conductive inorganic particles in the polyimide powder, and a molded article prepared using the same. Further, since the method of the present invention employs the combination of polyimide resin powder with multi-wall carbon nano-tube (MWCNT) by through a simple dry blending method using a Ball Mill, it is possible to prepare polyimide powder having electrical conductivity whose surface resistance is 10⁵Ω/□ or lower, and a molded article prepared using the same.

Therefore, the polyimide resin powder having heat-resistance, wear-resistance, mechanical properties and electrical conductivity prepared according to the method of the present invention can overcome the problem of static electricity caused in electrics/electronics, flat panel display and solar cell industries, and thus can be effectively used as a core material in the various high-tech industries including the same.

### [BRIEF DESCRIPTION OF THE DRAWINGS]

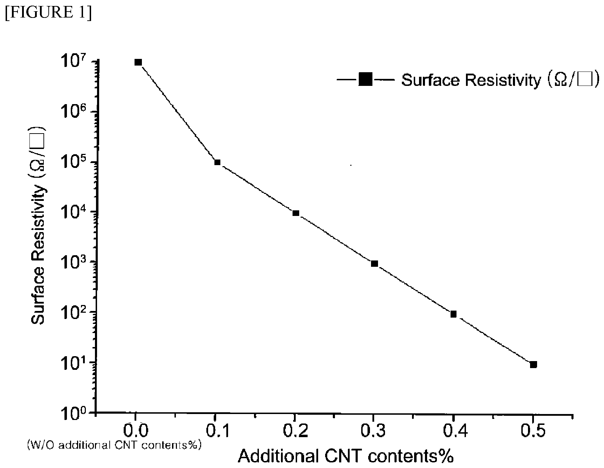

Fig. 1 is a graph comparing surface resistance of molded articles prepared using conductive polyimide resin powder, which can be obtained by dry blending the polyimide resin powder having an electric conductivity of 10⁶Ω/□∼10⁹Ω/□ according to the present invention with multi-wall carbon nano-tube.

### [DETAILED DESCRIPTION OF THE INVENTION]

Hereinafter, the present invention will be described in more detail.

The present invention is to prepare wholly aromatic polyimide copolymer in which electric conductivity is imparted to conventional polyimide resin. High heat-resistant polyimide copolymer prepared through liquid-phase imidization according to the present invention has a structure represented by following Formula 1. 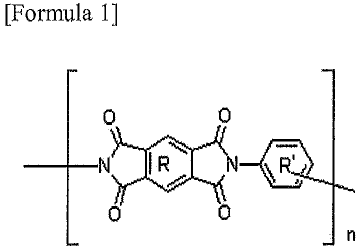 wherein 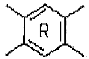 is one or more selected from the group consisting of 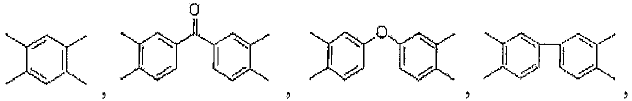 and 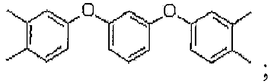 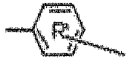 is one or more selected from the group consisting of

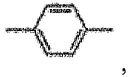

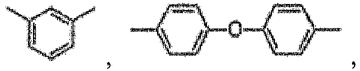

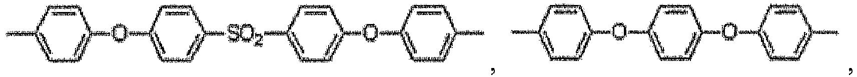

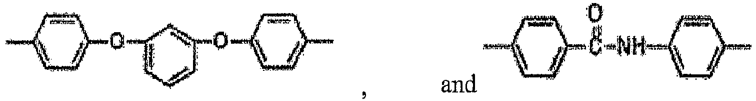

According to the present invention, the method for imparting electric conductivity to the polyimide copolymer having the above mentioned structure is as follows:
dissolving aromatic diamine at a desired concentration in a phenolic polar organic solvent in which conductive carbon black and MWCNT can be easily dispersed; and
adding well-pulverized electrically conductive carbon black and MWCNT at a desired concentration thereto and dispersing them therein as defined in claim 1.

Carbon nanotubes (CNTs) can be divided into two type of single-wall and multi-wall depending on their structure. The present invention is characterized by employing multi-wall carbon nano-tube which has a good dispersibility in a solvent phase.

The carbon nanotubes have been described in detail in Polymer (Korea), Vol 31, No 5, P422-427, 2007. There is no limitation to the kind of multi-wall carbon nanotubes as long as they are well-known in the art.

As an embodiment of the method according to the present invention, the following method is described. That is, the mixture is stirred for 30 minutes so that aromatic diamine can be completely dissolved and carbon black and MWCNT be uniformly dispersed therein. The reaction mixture is then heated lasting 1∼2 hours so as to increase its temperature to 60∼80°C. At this time, tetracarboxylic dianhydride is gradually added three times to the reaction mixture in a solid phase.

As an example of the aromatic diamine suitable for the present invention, one or more selected from the group consisting of 4,4'-oxydianiline (ODA), paraphenylene diamine (*p*-PDA), meta-phenylene diamine (*m*-PDA), metabisaminophenoxydiphenylsulfone (*m*-BAPS), parabisaminophenoxydiphenylsulfone (*p*-BAPS), 1,4-bisaminophenoxybenzene (TPE-Q), bisaminophenoxybenzene (TPE-R), and 4,4'-benzanilide (DABA) can used as an essential component, and conventional aromatic diamine monomers that have been used in polyimide polymerization can be further used.

Further, as an example of the tetracarboxylic dianhydride suitable for the present invention, one or more selected from the group consisting of pyromelitic dianhydride, benzophenonetetracarboxylic dianhydride, oxydiphthalic dianhydride,
and biphthalic dianhydride can be used as an essential component, and conventional aromatic diamine monomers that have been used in polyimide polymerization can be further used.

After the reaction mixture is stirred at 60∼80°C for 1∼2 hours, its temperature is gradually increased to 160∼200°C, followed by keeping it for 1∼2 hours so as to generate slurry. The thus generated slurry is filtered. The filtered polyimide powder is washed with an organic solvent having a low boiling point such as acetone or methyl alcohol, and dried at a temperature of 100°C∼250°C, under vacuum of 10⁻¹ Torr or lower and nitrogen atmosphere. Here, the drying temperature is preferably in the range of 160°C∼220 °C, more preferably 190°C.

According to the present invention, the total amount of electrically conductive carbon black powder and multi-wall carbon nano-tube powder are preferably in the range of 1∼30 wt% based on the total amount of monomers used in the reaction. In particular, it is preferable to use the conductive carbon black in the amount of 0.5∼18 wt% based on the total amount of monomers used. It is preferable to use the MWCNT in the amount of 0.5∼12wt% based on the total amount of monomers used. It is preferable to use carbon black powder having a specific surface area of 300 m²/g or higher, but is not limited thereto.

According to the present invention, the relative ratio of the electrically conductive carbon black and multi-wall carbon nano-tube is as follows: 60∼80 wt% of electrically conductive carbon black, and 40∼20 wt% of multi-wall carbon nano-tube, but is not limited thereto.

The resulting polyimide resin powder has a surface resistance of 10⁶∼10⁹Ω/□, a low crystallinity of 30% or lower, an imidation degree of 98% or higher, and a high specific surface area of 50∼400 m²/g, and thus can be effectively subjected to compression molding.

Further, the conductive carbon black used to impart electric conductivity is preferably added in an amount of 8∼12 wt% based on the total amount of monomer used in the reaction, and it is preferable to use it having a specific surface area of 300 m²/g or higher. The MWCNT is preferably used in an amount of 1∼5 wt% based on the total amount of monomer used in the reaction.

The phenolic polar organic solvent having a high boiling point used in the above reaction is preferably meta-cresol, but it is possible to use a mixed cresol in which ortho-, meta- and para-isomers are nonuniformly mixed.

Further, the concentration of a total solid is preferably in a range from 6∼16 wt%, and more preferably in a range from 8∼12 wt%.

The thus prepared polyimide resin powder according to the present invention has an inherent viscosity of 0.7∼2.5 dl/g, a crystallinity of 20∼30%, a specific surface area of 50∼400 m²/g, and an imidization degree of 98∼99%.

The electrically conductive polyimide resin prepared according to the method of the present invention can be prepared into a electrically conductive polyimide molded article having high heat-resistance and excellent mechanical strength through compression molding at room temperature and high temperature under the pressure of 50,000∼100,000 psi (345∼690 Mpa), and then fired at a temperature of 300∼500°C and under nitrogen atmosphere for 1∼5 hours, or through compression molding to which high temperature and high pressure are simultaneously applied.

At this time, the thus prepared molded article shows excellent mechanical properties in which tensile strength is 900 kgf/cm² and elongation rate is 6.5% or higher, and the surface resistance of the molded article has an anti-static area of 10⁶-10⁹ Ω/□.

The polyimide powder prepared according to the method of the present invention can be directly used as an anti-static resistant, high thermostable material for static electricity proof in a surface resistance area of 10⁶∼10⁹Ω/□. Further, although the polyimide powder is further mixed with the same kind of MWCNT in an amount of 0.1∼1.0 wt%, subjected to dry blending using a Ball Mill in a powder phase, and then subjected to compression molding, it is possible to prepare an electrically conductive polyimide molded article with maintaining excellent mechanical properties in which tensile strength is 900 kgf/cm², elongation rate is 6.5% or higher, and surface resistance is 10⁵ Ω/□ or lower.

As a result, the present invention provides the method for preparing electrically conductive polyimide powder and a molded article, which prepares host powder having excellent antistatic properties whose surface resistance is in the area of 10⁶∼10⁹ Ω/□ through one step direct polymerization by adding conductive carbon black and MWCNT whose contents and ratios are regulated, and then, adds a extremely small amount of MWCNT thereto in a simple method. According to the method of the present invention, it is easy to regulate the surface resistance of polyimide powder to have a desired area and is effective to prepare electrically conductive polyimide powder and a molded article that show almost no change in mechanical properties.

The present invention is further illustrated by the following examples. However, it shall be understood that these examples are only used to specifically set forth the present invention, rather than being understood that they are used to limit the present invention in any form.

### Example 1: Carbon Black (10wt%) + MWCNT (3wt%)

A 2-L reactor equipped with a stirrer, a temperature regulator and a nitrogen injector was added with 36.11 g of 4,4'-oxydianiline (ODA), 8.92 g of conductive carbon black (AkzoNobel, KETJENBLACK EC 300J), and 2.68 g of MWCNT (NANOCYL, NC 7000), and the resulting mixture was dissolved and dispersed in 653 g of mixed cresol, and then passed through nitrogen gas at room temperature.

While gradually increasing the temperature of the mixture from room temperature to 60∼80°C lasting 1∼2 hours, 39.45 g of pyromelitic dianhydride (PMDA) was added thereto in a solid phase. Here, the addition was carried out three times with an equal amount each time, and the concentration of the solid was fixed to 11 wt%. After allowing the mixture to react at 60∼80°C for 1∼2 hours, the temperature of the reaction solution was increased up to 160∼200°C and stirred for 1∼2 hours to induce imidization. Upon completion of the reaction, polyimide polymer precipitated from the reaction was filtered, washed with 2 L of acetone, and then dried at 190°C under vacuum (10⁻¹ Torr) and nitrogen atmosphere for 16 hours.

Inherent viscosity of the thus prepared polyimide resin powder was measured at a concentration of 0.5 g/dl using concentrated sulfuric acid as a solvent at 30°C. As a result, the polyimide resin had an inherent viscosity of 1.20 dl/g, and its imidization degree was 99%.

The polyimide resin powder was subjected to compression molding at a pressure of 100,000 psi, and then sintered at 400°C for 3 hours under nitrogen atmosphere, thereby obtaining a polyimide molded article.

### Example 2: Example 1 + 0.1 wt% MWCNT

A 2-L reactor equipped with a stirrer, a temperature regulator and a nitrogen injector was added with 36.11 g of 4,4'-oxydianiline (ODA), 8.92 g of conductive carbon black, and 2.68 g of MWCNT, and the resulting mixture was dissolved and dispersed in 653 g of mixed cresol, and then passed through nitrogen gas at room temperature.

While gradually increasing the temperature of the mixture from room temperature to 60∼80°C lasting 1∼2 hours, 39.45 g of pyromelitic dianhydride (PMDA) was added thereto in a solid phase. Here, the addition was carried out three times with an equal amount each time, and the concentration of the solid was fixed to 11 wt%. After allowing the mixture to react at 60∼80°C for 1-2 hours, the temperature of the reaction solution was increased up to 160∼200°C and stirred for 1∼2 hours to induce imidization. Upon completion of the reaction, polyimide polymer precipitated from the reaction was filtered, washed with 2 L of acetone, and then dried at 190°C under vacuum (10⁻¹ Torr) and nitrogen atmosphere for 16 hours.

The resulting mixture was added with 0.1 wt% of MWCNT, and then subjected to milling and mixing at 60 rpm for 1∼3 hours using a rotating ball mill.

The polyimide resin powder was subjected to compression molding at a pressure of 100,000 psi, and then sintered at 400°C for 3 hours under nitrogen atmosphere, thereby obtaining a polyimide molded article.

### Example 3: Example 1 + 0.2 wt% MWCNT

A 2-L reactor equipped with a stirrer, a temperature regulator and a nitrogen injector was added with 36.11 g of 4,4'-oxydianiline (ODA), 8.92 g of conductive carbon black, and 2.68 g of MWCNT, and the resulting mixture was dissolved and dispersed in 653 g of mixed cresol, and then passed through nitrogen gas at room temperature.

While gradually increasing the temperature of the mixture from room temperature to 60∼8 °C lasting 1∼2 hours, 39.45 g of pyromelitic dianhydride (PMDA) was added thereto in a solid phase. Here, the addition was carried out three times with an equal amount each time, and the concentration of the solid was fixed to 11 wt%. After allowing the mixture to react at 60∼80°C, for 1∼2 hours, the temperature of the reaction solution was increased up to 160∼200°C and stirred for 1∼2 hours to induce imidization. Upon completion of the reaction, polyimide polymer precipitated from the reaction was filtered, washed with 2 L of acetone, and then dried at 190°C under vacuum (10⁻¹ Torr) and nitrogen atmosphere for 16 hours.

The resulting mixture was added with 0.2 wt% of MWCNT, and then subjected to milling and mixing at 60 rpm for 1 hour using a rotating ball mill.

The polyimide resin powder was subjected to compression molding at a pressure of 100,000 psi, and then fired at 400°C for 3 hours under nitrogen atmosphere, thereby obtaining a polyimide molded article.

### Example 4: Example 1 + 0.3 wt% MWCNT

A 2-L reactor equipped with a stirrer, a temperature regulator and a nitrogen injector was added with 36.11 g of 4,4'-oxydianiline (ODA), 8.92 g of conductive carbon black, and 2.68 g of MWCNT, and the resulting mixture was dissolved and dispersed in 653 g of mixed cresol, and then passed through nitrogen gas at room temperature.

While gradually increasing the temperature of the mixture from room temperature to 60∼80°C lasting 1∼2 hours, 39.45 g of pyromelitic dianhydride (PMDA) was added thereto in a solid phase. Here, the addition was carried out three times with an equal amount each time, and the concentration of the solid was fixed to 11 wt%. After allowing the mixture to react at 60∼80°C, for 1∼2 hours, the temperature of the reaction solution was increased up to 160∼200°C and stirred for 1∼2 hours to induce imidization. Upon completion of the reaction, polyimide polymer precipitated from the reaction was filtered, washed with 2 L of acetone, and then dried at 190°C under vacuum (10⁻¹ Torr) and nitrogen atmosphere for 16 hours.

The resulting mixture was added with 0.3 wt% of MWCNT, and then subjected to milling and mixing at 60 rpm for 1∼3 hours using a rotating ball mill.

The polyimide resin powder was subjected to compression molding at a pressure of 100,000 psi, and then sintered at 400°C for 3 hours under nitrogen atmosphere, thereby obtaining a polyimide molded article.

### Example 5: Example 1 + 0.4 wt% MWCNT

A 2-L reactor equipped with a stirrer, a temperature regulator and a nitrogen injector was added with 36.11 g of 4,4'-oxydianiline (ODA), 8.92 g of conductive carbon black, and 2.68 g of MWCNT, and the resulting mixture was dissolved and dispersed in 653 g of mixed cresol, and then passed through nitrogen gas at room temperature.

While gradually increasing the temperature of the mixture from room temperature to 60∼80°C lasting 1∼2 hours, 39.45 g of pyromelitic dianhydride (PMDA) was added thereto in a solid phase. Here, the addition was carried out three times with an equal amount each time, and the concentration of the solid was fixed to 11 wt%. After allowing the mixture to react at 60∼80°C for 1∼2 hours, the temperature of the reaction solution was increased up to 160∼200°C and stirred for 1∼2 hours to induce imidization. Upon completion of the reaction, polyimide polymer precipitated from the reaction was filtered, washed with 2 L of acetone, and then dried at 190°C under vacuum (10⁻¹ Torr) and nitrogen atmosphere for 16 hours.

The resulting mixture was added 0.4 wt% of MWCNT, and then subjected to milling and mixing at 60 rpm for 1 hour using a rotating ball mill.

The polyimide resin powder was subjected to compression molding at a pressure of 100,000 psi, and then fired at 400°C for 3 hours under nitrogen atmosphere, thereby obtaining a polyimide molded article.

### Example 6: Example 1 + 0.5 wt% MWCNT

A 2-L reactor equipped with a stirrer, a temperature regulator and a nitrogen injector was added with 36.11 g of 4,4'-oxydianiline (ODA), 8.92 g of conductive carbon black, and 2.68 g of MWCNT, and the resulting mixture was dissolved and dispersed in 653 g of mixed cresol, and then passed through nitrogen gas at room temperature.

While gradually increasing the temperature of the mixture from room temperature to 60∼80°C lasting 1∼2 hours, 39.45 g of pyromelitic dianhydride (PMDA) was added thereto in a solid phase. Here, the addition was carried out three times with an equal amount each time, and the concentration of the solid was fixed to 11 wt%. After allowing the mixture to react at 60∼80°C for 1∼2 hours, the temperature of the reaction solution was increased up to 160∼200°C and stirred for 1∼2 hours to induce imidization. Upon completion of the reaction, polyimide polymer precipitated from the reaction was filtered, washed with 2 L of acetone, and then dried at 190°C under vacuum (10⁻¹ Torr) and nitrogen atmosphere for 16 hours.

The resulting mixture was added with 0.5 wt% of MWCNT, and then subjected to milling and mixing at 60 rpm for 1 hour using a rotating ball mill.

The polyimide resin powder was subjected to compression molding at a pressure of 100,000 psi, and then sintered at 400°C for 3 hours under nitrogen atmosphere, thereby obtaining a polyimide molded article.

### Comparative Example 1: Graphite powder (15 wt%) + Carbon black (10 wt%)

A 2-L reactor equipped with a stirrer, a temperature regulator and a nitrogen injector was added with 36.11 g of 4,4'-oxydianiline (ODA), 8.92 g of conductive carbon black, 13.40 g of graphite powder, and polyimide resin powder and its molded article were prepared using 705 g of mixed cresol, and 39.45 g of pyromelitic dianhydride (PMDA) according to the same method as described in Example 1. The thus obtained polyimide powder had an inherent viscosity of 0.9 dl/g, and its imidization degree was 98%.

### Comparative Example 2: Carbon black (20 wt%)

A 2-L reactor equipped with a stirrer, a temperature regulator and a nitrogen injector, was added with 36.11 g of 4,4'-oxydianiline (ODA), 17.84 g of conductive carbon black, and polyimide resin powder and its molded article were prepared using 755 g of mixed cresol, and 39.45 g of pyromelitic dianhydride (PMDA) according to the same method as described in Example 1. The thus obtained polyimide powder had an inherent viscosity of 0.95 dl/g, and its imidization degree was 98%.

The results are shown in following Table 1.

**[Table 1]**

| | Composition | Tensile strength (kg/cm²)¹⁾ | Elongation rate (%)¹⁾ | Surface resistance (Ω/□)²⁾ |
|---|---|---|---|---|
| Comparative Example1 | graphite (15wt%)+carbon black (10wt%) | 720 | 5.2 | 10⁴ |
| Comparative Example2 | carbon black 20wt% | 752 | 6.2 | 10² |
| Example1 | carbon black (10wt%)+MWCNT (3wt%) | 930 | 6.8 | 10⁷ |
| Example2 | Example1 + 0.1wt% MWCNT | 921 | 6.7 | 10⁵ |
| Example3 | Example1 + 0.2wt% MWCNT | 915 | 6.7 | 10⁴ |
| Example4 | Example1 + 0.3wt% MWCNT | 907 | 6.6 | 10³ |
| Example5 | Example1 + 0.4wt% MWCNT | 905 | 6.6 | 10² |
| Example6 | Example1 + 0.5wt% MWCNT | 900 | 6.5 | 10¹ |

| | | | | |
|---|---|---|---|---|
| 1) Tensile strength and elongation rate were measured according to an ASTM D-1708 method. 2) Surface resistance was measured according to a JIS K7194 (@90V) method. | | | | |

As a result, the present invention has found a composition of electrically conductive filler which is more effective to prepare polyimide resin powder having antistatic properties, electric conductivity and optimal mechanical properties. The method of the present invention is advantageous over the conventional methods in that its process is easier and more cost-effective and enables to produce products with improved properties.

## Claims

1. A method for preparing wholly aromatic polyimide, non-soluble, non-melting composite powder, comprising: dissolving aromatic diamine in a phenolic polar organic solvent in which electrically conductive carbon black powder and multi-wall carbon nano-tube (MWCNT) powder are dispersed, adding aromatic tetracarboxylic dianhydride thereto, and
polymerizing the resulting mixture, wherein the polymerization is carried out by completely dissolving aromatic diamine, stirring the mixture so that carbon black and MWCNT can be dispersed,
adding tetracarboxylic dianhydride in a solid phase thereto while increasing the temperature of the mixture to 60∼80°C for 1∼2 hours,
stirring the resulting mixture at a temperature of 60∼80°C for 1∼2 hours,
increasing the temperature of the mixture to 160∼200°C, and
keeping the mixture at that temperature for 1∼2 hours.

2. The method according to Claim 1, wherein the phenolic polar organic solvent is one or more selected from the group consisting of meta-cresol, ortho-cresol, meta-cresol and para-cresol.

3. The method according to Claim 1, wherein the aromatic diamine is one or more selected from the group consisting of 4,4'-oxydianiline (ODA), paraphenylene diamine (*p*-PDA), metaphenylene diamine (*m*-PDA),
metabisaminophenoxydiphenylsulfone (m-BAPS), parabisaminophenoxydiphenylsulfone (p-BAPS), 1,4-bisaminophenoxybenzene (TPE-Q), bisaminophenoxybenzene (TPE-R), and 4,4'- benzanilide (DABA).

4. The method according to Claim 1, wherein the tetracarboxylic dianhydride is one or more selected from the group consisting of pyromelitic dianhydride, benzophenonetetracarboxylic dianhydride, oxydiphthalic dianhydride, and biphthalic dianhydride.

5. The method according to Claim 1, wherein the total amount of the electrically conductive carbon black powder and multi-wall carbon nano-tube powder is in the range of 1∼30 wt% based on the total amount of monomers used.

6. The method according to Claim 1, wherein the mixed ratio of the electrically conductive carbon black and multi-wall carbon nano-tube is in the range of 60∼80 wt% of the electrically conductive carbon black and 40∼20 wt% of the multi-wall carbon nano-tube.

7. The method according to Claim 1, which further comprises:
performing dry blending with 0.1∼1.0 wt% of additional multi-wall carbon nano-tube (MWCNT) based on the amount of the thus prepared composite powder.

8. A polyimide molded article, which is prepared using the polyimide composite powder prepared by the method according to any one of Claims 1 to 7.

9. The polyimide molded article according to Claim 8, which is prepared by compression molding the polyimide composite powder at a pressure of 345∼690 MPa (50,000∼100,000 psi), and sintering it at a temperature of 300°∼500°C for 1∼5 hours.

## Patentansprüche

1. Verfahren zur Herstellung von nicht-löslichem, nicht-schmelzendem vollständig aromatischem Polyimid-Verbundwerkstoffpulver, umfassend: Auflösen von aromatischem Diamin in einem phenolischen polaren organischen Lösungsmittel, in welchem elektrisch leitfähiges Rußpulver und mehrwandiges Kohlenstoffnanoröhrchen (MWCNT)-Pulver dispergiert sind, Zugeben von aromatischem Tetracarbonsäuredianhydrid dazu, und
Polymerisieren des erhaltenen Gemisches, wobei die Polymerisation ausgeführt wird durch vollständiges Auflösen von aromatischem Diamin, Rühren des Gemisches, so dass der Ruß und MWCNT dispergiert werden können,
Zugeben von Tetracarbonsäuredianhydrid in einer festen Phase dazu während die Temperatur des Gemisches für 1-2 Stunden auf 60-80°C erhöht wird,
Rühren des erhaltenen Gemisches bei einer Temperatur von 60-80°C für 1-2 Stunden,
Erhöhen der Temperatur des Gemisches auf 160-200°C, und
Halten des Gemisches bei der Temperatur für 1-2 Stunden.

2. Verfahren nach Anspruch 1, wobei das phenolische polare organische Lösungsmittel eines oder mehrere ist, ausgewählt aus der Gruppe, bestehend aus meta-Cresol, ortho-Cresol, meta-Cresol und para-Cresol.

3. Verfahren nach Anspruch 1, wobei das aromatische Diamin eines oder mehrere ist, ausgewählt aus der Gruppe, bestehend aus 4,4'-Oxydianilin (ODA), Paraphenylendiamin (*p*-PDA), Metaphenylendiamin (*m*-PDA), Metabisaminophenoxydiphenylsulfon (*m*-BAPS), Parabisaminophenoxydiphenylsulfon (*p*-BAPS), 1,4-Bisaminophenoxybenzol (TPE-Q), Bisaminophenoxybenzol (TPE-R) und 4,4'-Benzanilid (DABA).

4. Verfahren nach Anspruch 1, wobei das Tetracarbonsäuredianhydrid eines oder mehrere ist, ausgewählt aus der Gruppe, bestehend aus Pyromellithsäuredianhydrid, Benzophenontetracarbonsäuredianhydrid, Oxydiphthalsäuredianhydrid und Biphthalsäuredianhydrid.

5. Verfahren nach Anspruch 1, wobei die Gesamtmenge des elektrisch leitfähigen Rußpulvers und mehrwandigen Kohlenstoffnanoröhrchen-Pulvers in dem Bereich von 1-30 Gew.-%, basierend auf der Gesamtmenge der verwendeten Monomere, liegt.

6. Verfahren nach Anspruch 1, wobei das Mischverhältnis des elektrisch leitfähigen Rußes und mehrwandigen Kohlenstoffnanoröhrchens in dem Bereich von 60-80 Gew.-% von dem elektrisch leitfähigen Ruß und 40-20 Gew.-% des mehrwandigen Kohlenstoffnanoröhrchens liegt.

7. Verfahren nach Anspruch 1, welches weiterhin umfasst:
Ausführen von Trockenvermischen mit 0,1-1,0 Gew.-% von zusätzlichen mehrwandigen Kohlenstoffnanoröhrchen (MWCNT), basierend auf der Menge des so hergestellten Verbundwerkstoffpulvers.

8. Polyimidformgegenstand, welcher unter Verwendung des Polyimid-Verbundwerkstoffpulvers, hergestellt durch das Verfahren nach einem der Ansprüche 1 bis 7, hergestellt ist.

9. Polyimidformgegenstand nach Anspruch 8, welcher durch Pressformen des Polyimid-Verbundwerkstoffpulvers bei einem Druck von 345-690 MPa (50 000-100 000 psi) und Sintern desselben bei einer Temperatur von 300°C-500°C für 1-5 Stunden hergestellt ist.

## Revendications

1. Procédé de préparation de poudre composite de polyimide entièrement aromatique, non soluble, non fusible, comprenant :
la dissolution de diamine aromatique dans un solvant organique polaire phénolique dans lequel de la poudre de noir de carbone électroconductrice et de la poudre de nanotube de carbone multi-parois (MWCNT) sont dispersées,
l'ajout de dianhydride tétracarboxylique aromatique à ceci, et
la polymérisation du mélange résultant, dans lequel la polymérisation est réalisée par dissolution complète de la diamine aromatique, l'agitation du mélange de manière à ce que le noir de carbone et le MWCNT soient dispersés,
l'ajout de dianhydride tétracarboxylique en phase solide à ceci tout en augmentant la température du mélange à 60 ∼ 80 °C pendant 1 ∼ 2 heures,
l'agitation du mélange obtenu à une température de 60 ∼ 80 °C pendant 1 ∼ 2 heures,
l' augmentation de la température du mélange à 160 ∼ 200 °C, et
le maintien du mélange à cette température pendant 1 ∼ 2 heures.

2. Procédé selon la revendication 1, dans lequel le solvant organique polaire phénolique est un ou plusieurs sélectionnés dans le groupe constitué du méta-crésol, de l'ortho-crésol, du méta-crésol et du para-crésol.

3. Procédé selon la revendication 1, dans lequel la diamine aromatique est une ou plusieurs sélectionnées dans le groupe constitué de la 4,4'-oxydianiline (ODA), de la paraphénylène diamine (p-PDA), de la métaphénylène diamine (m-PDA), du métabisaminophénoxydiphénylsulfone (m-BAPS), du parabisaminophénoxydiphénylsulfone (p-BAPS), du 1,4-bisaminophénoxybenzène (TPE-Q), du bisaminophénoxybenzène (TPE-R), et du 4,4'-benzanilide (DABA).

4. Procédé selon la revendication 1, dans lequel le dianhydride tétracarboxylique est un ou plusieurs sélectionnés dans le groupe constitué du dianhydride pyromélitique, du dianhydride benzophénonetétracarboxylique, du dianhydride oxydiphtalique, et du dianhydride biphtalique.

5. Procédé selon la revendication 1, dans lequel la quantité totale de poudre de noir de carbone électroconductrice et de poudre de nanotube de carbone multi-parois se trouve dans la plage de 1 ∼ 30 % en poids sur la base de la quantité totale de monomères utilisés.

6. Procédé selon la revendication 1, dans lequel le rapport de mélange du noir de carbone électroconducteur et du nanotube de carbone multi-parois se trouve dans la plage de 60 ∼ 80 % en poids du noir de carbone électroconducteur et de 40 ∼ 20 % en poids du nanotube de carbone multi-parois.

7. Procédé selon la revendication 1, qui comprend en outre :
la réalisation d'un mélange à sec avec 0,1 ∼ 1,0 % en poids de nanotube de carbone multi-parois (MWCNT) supplémentaire sur la base de la quantité de la poudre composite ainsi préparée.

8. Article moulé en polyimide, qui est préparé en utilisant la poudre composite de polyimide préparée par le procédé selon l'une quelconque des revendications 1 à 7.

9. Article moulé en polyimide selon la revendication 8, qui est préparé par moulage par compression de la poudre composite de polyimide à une pression de 345 ∼ 690 Mpa (50 000 ∼ 100 000 psi), et par frittage de celle-ci à une température de 300 °C ∼ 500 °C pendant 1 ∼ 5 heures.
